# EUROPEAN PATENT APPLICATION

(11) **EP 4 600 389 A1**
(43) Date of publication of application: **13.08.2025**
(21) Application number: 23874557.4
(22) Date of filing: 25.08.2023
(51) Int. Cl.: C22B 3/26, C22B 3/04, C22B 3/08, C22B 3/22, C22B 3/44, C22B 23/00

(54) **METHOD FOR REMOVING ORGANIC IMPURITIES FROM IMPURITY-CONTAINING ORGANIC SOLVENT**

(30) Priority: 05.10.2022 JP 2022160815; 30.11.2022 JP 2022191260
(71) Applicant: SUMITOMO METAL MINING CO., LTD., Tokyo 105-8716 (JP)
(72) Inventor: HIGAKI Tatsuya, Niihama-shi, Ehime 792-0002 (JP); WATANABE Hiroto, Niihama-shi, Ehime 792-0002 (JP); OHARA Hideki, Niihama-shi, Ehime 792-0002 (JP)
(74) Representative: Jones, Nicholas Andrew
(86) International application number: PCT/JP2023/030653
(87) International publication number: WO 2024/075425

(57) **Abstract**

Provided is a removal method for removing organic impurities from an organic solvent containing impurities. After adjusting a viscosity of an organic solvent containing impurities in a viscosity adjustment step (S21), a sulfuric acid washing step (S1) of adding sulfuric acid to an organic solvent containing impurities to obtain a post-sulfuric acid washing liquid and a post-sulfuric acid washing organic, an alkaline washing step (S2) of adding a neutralizer to the post-sulfuric acid washing organic to adjust a pH and separating the post-sulfuric acid washing organic into a post-washing heavy liquid containing a neutralized precipitate, an aqueous phase, and an organic phase and a post-washing light liquid containing an organic phase, and a precipitate dissolution step (S3) of adding sulfuric acid to the post-washing heavy liquid to obtain a post-precipitate dissolution organic and a precipitate dissolution liquid are executed, and the post-precipitate dissolution organic is repeatedly used in the alkaline washing step (S2). Metallic impurities are removed in the sulfuric acid washing step (S1), the post-sulfuric acid washing organic containing organic impurities is subjected to the alkaline washing step (S2), the obtained post-washing heavy liquid is separated into the precipitate dissolution liquid and the post-precipitate dissolution organic in the precipitate dissolution step (S3), and the post-precipitate dissolution organic is repeatedly subjected to the alkaline washing step (S2) to obtain the organic solvent from which the organic impurities are removed.

## Description

### Technical Field

The present invention relates to a removal method for removing organic impurities from an organic solvent containing impurities.

### Background Art

One of methods for recovering nickel and cobalt from an oxide ore containing nickel and cobalt is a method in which an oxide ore is maintained at a high temperature exceeding 200°C under a high pressure together with a sulfuric acid solution to obtain a leachate in which nickel and cobalt are leached in the sulfuric acid solution, then, for example, a neutralizer is added to the leachate to adjust pH, thereby precipitating impurities, such as iron and aluminum, and removing them, and then a sulfurizing agent, such as a hydrogen sulfide gas, is added to the solution after the impurities are removed, thereby precipitating nickel and cobalt as a mixed sulfide and recovering them.

Furthermore, a chloride solution in which nickel and cobalt are leached using a chlorine gas or the like is obtained from the mixed sulfide obtained by the method, the chloride solution is subjected to a method, such as a cementation (replacement) reaction and a neutralization reaction, to remove the most of impurities, such as copper, iron, arsenic, and zinc, remaining in the chloride solution, and further, nickel and cobalt are separated using a method of solvent extraction or the like and recovered in a form of salt of compound, such as a sulfate and a chloride, or electrowinning is performed to recover nickel and cobalt as high purity electrolytic nickel and electrolytic cobalt.

When the method as described above is used, in an extractant used in the solvent extraction and a diluent added to dilute the extractant (hereinafter collectively referred to as "organic solvents"), impurities containing metal ions (hereinafter simply referred to as "metallic impurities") remain in some cases.

A main reason for the remaining is generally that the amount of impurities contained in the chloride solution is originally large, and it is difficult to completely remove the impurities only by performing the treatment of cementation, neutralization, and the like about once.

Specifically, an extraction starting liquid used in the treatment of a nickel-oxidized ore contain a large amount of impurities, such as zinc, in addition to nickel and cobalt as recovery targets in some cases. When the treatment of neutralization or the like is more strictly performed to completely remove the zinc, for example, nickel and cobalt coprecipitate with metallic impurities, such as zinc, and are lost, therefore, employing it as an impurity removal method is difficult.

Therefore, as another method for removing the metallic impurities contained in organic solvents, for example, prior arts of Patent Documents 1 to 3 have been proposed. In these prior arts, an organic solvent after back extraction is subject to a neutralization step, thereby removing the metallic impurities.

Patent Document 1 discloses a method for removing impurities in an organic solvent capable of efficiently separating the organic solvent and the impurities. Specifically, the method includes a neutralization step of adding a neutralizer to an organic solvent containing impurities, such as zinc, to generate a neutralized precipitate (also referred to as a "dezincification step" because of a general high abundance of zinc), and an oil-water separation step of performing oil-water separation of the organic solvent containing the neutralized precipitate into an aqueous phase containing the neutralized precipitate and an organic phase. In the neutralization step, a pH of the organic solvent is adjusted to 7.95 to 9.15. In the neutralization step, increasing a particle diameter of the neutralized precipitate increases a speed of the neutralized precipitate precipitating in the aqueous phase, thereby allowing enhancing a phase separability to allow efficiently separating the organic solvent and the impurities.

Patent Document 2 discloses a method in which a temperature of the organic solvent is adjusted to 50°C to 60°C in the neutralization step of Patent Document 1 to reduce a viscosity of the organic solvent and increase the speed of the neutralized precipitate precipitating in the aqueous phase, thereby allowing enhancing the phase separability to allow efficiently separating the organic solvent and the impurities.

Patent Document 3 discloses a method in which in the neutralization step of Patent Document 1 and Patent Document 2, by adding water to the organic solvent to dilute the organic solvent, the viscosity is reduced and the speed of the neutralized precipitate precipitating in the aqueous phase is increased, thereby allowing efficiently separating the organic solvent and the impurities.

In the methods of Patent Documents 1 to 3, in the neutralization step, a neutralizer, such as sodium hydroxide, is added to the organic solvent to eliminate (deactivate) acid attached to amine in the organic solvent and simultaneously metallic impurities are obtained as a neutralized precipitate in a form of a metallic hydroxide. Next, the organic solvent containing the neutralized precipitate is separated into an aqueous phase containing the neutralized precipitate (hereinafter also referred to as a "heavy liquid") and an organic phase without the neutralized precipitate (hereinafter also referred to as a "light liquid") using an oil-water separator, such as a decanter.

The light liquid is activated again as an organic solvent from which the metallic impurities are removed by adding an acid aqueous solution thereto, and repeatedly reused for the solvent extraction in an extraction stage of a solvent extraction step.

On the other hand, since it is inevitable that a small amount of the organic solvent is mixed in the heavy liquid, the organic solvent is sent to a precipitate dissolution step and dissolved by adding hydrochloric acid, and separated into a precipitate dissolution liquid containing metallic impurities, such as zinc, and a post-precipitate dissolution organic mainly containing an organic phase through oil-water separation.

Since the precipitate dissolution liquid is an aqueous solution of the metallic impurities, it is sent to a wastewater treatment step and treated by a publicly known method.

On the other hand, the post-precipitate dissolution organic is repeatedly used as a diluent to easily separate the aqueous phase and a solid content involved in a post-back extraction organic in the neutralization step, and finally repeatedly subjected to the solvent extraction step as the above-described light liquid and reused as the organic solvent.

However, the organic solvent after the back extraction contains, in addition to the above-described metallic impurities, organic impurities contained in the extractant and the diluent from the time of manufacture and organic impurities generated due to the organic solvent deteriorated with use. Examples of the specific organic impurities include carboxylic acid and sulfonic acid.

These organic impurities gradually increase and accumulate in accordance with the repeated use of the organic solvent, and eventually, there is a problem of reducing an impurity separation capacity of the organic solvent.

Iron or zinc as one of the organic impurities and metallic impurities is present as a complex (chloro complex) with chlorine ions (chloride ions), especially, the chloro complexes of iron and zinc have a characteristic of being strongly bonded to an organic solvent to become stable, and the separation from the organic solvent is not easy.

Reduction of the separation capacity of the organic solvent leads to reduction of quality and productivity, therefore, it is desired to regenerate the organic solvent. However, an industrially efficient method has not been found, and it has been a problem to be solved.

### Citation List

### Patent Literature

Patent Document 1: JP-A-2015-157990
Patent Document 2: JP-A-2015-157991
Patent Document 3: JP-A-2015-157992

### Summary of Invention

### Technical Problem

It is an object of the present invention to provide a removal method for removing organic impurities from an organic solvent containing impurities.

### Solution to Problem

A removal method of organic impurities in an organic solvent of a first invention is a method for removing organic impurities from an organic solvent containing impurities. The method includes a basic process that includes (1) to (4), (1) a sulfuric acid washing step of adding sulfuric acid to an organic solvent containing impurities to obtain a post-sulfuric acid washing liquid and a post-sulfuric acid washing organic, (2) an alkaline washing step of adding a neutralizer to the post-sulfuric acid washing organic to adjust a pH and separating the post-sulfuric acid washing organic into a post-washing heavy liquid containing a neutralized precipitate, an aqueous phase, and an organic phase and a post-washing light liquid containing an organic phase, and (3) a precipitate dissolution step of adding sulfuric acid to the post-washing heavy liquid to obtain a post-precipitate dissolution organic and a precipitate dissolution liquid. (4) The post-precipitate dissolution organic is repeatedly used in the alkaline washing step.

In a removal method of organic impurities in an organic solvent of a second invention, which is in the first invention, the organic solvent containing impurities subjected to the basic process is a post-back extraction organic obtained by separating a post-extraction liquid containing nickel from a raw material containing nickel, cobalt, and zinc by a solvent extraction step to obtain a post-extraction organic and separating a post-back extraction liquid containing cobalt from the post-extraction organic by a back extraction step.

In a removal method of organic impurities in an organic solvent of a third invention, which is in the second invention, the organic solvent containing impurities subjected to the basic process is a post-back extraction organic obtained by obtaining an extraction starting liquid by a leaching step in which a raw material containing nickel, cobalt, and zinc is leached with an acid or a chlorine gas and then sequentially executing the solvent extraction step and the back extraction step.

In a removal method of organic impurities in an organic solvent of a fourth invention, which is in the second invention, the organic solvent containing impurities subjected to the basic process is a post-separation post-precipitate dissolution organic obtained by obtaining a post-separation heavy liquid and a post-separation light liquid by a zinc separation step in which a neutralizer is added to the post-back extraction organic to separate zinc and performing a precipitate-liquid separation step in which hydrochloric acid is added to the post-separation heavy liquid to separate a post-separation precipitate dissolution liquid.

In a removal method of organic impurities in an organic solvent of a fifth invention, which is in the first invention, in the alkaline washing step, the pH when the post-sulfuric acid washing organic and the neutralizer are mixed is maintained in a range of 6 or more and 12 or less.

In a removal method of organic impurities in an organic solvent of a sixth invention, which is in the fifth invention, the neutralizer is added in a form of a solution or a slurry containing the neutralizer.

In a removal method of organic impurities in an organic solvent of a seventh invention, which is in the first invention, the organic solvent containing impurities is subjected to a viscosity adjustment step of adjusting a viscosity before subjected to the basic process.

In a removal method of organic impurities in an organic solvent of an eighth invention, which is in the first invention, the post-precipitate dissolution organic obtained by the basic process is subjected to a deterioration evaluation step of evaluating a deterioration, and then repeatedly subjected to the alkaline washing step.

In a removal method of organic impurities in an organic solvent of a ninth invention, which is in the seventh invention, in the viscosity adjustment step, the organic solvent is diluted until the viscosity of the organic solvent becomes less than 200 mPa•s.

In a removal method of organic impurities in an organic solvent of a tenth invention, which is in the ninth invention, in the viscosity adjustment step, an organic solvent having a diluent concentration of 80 to 60 weight% and an extractant concentration of 20 to 40 weight% is used.

In a removal method of organic impurities in an organic solvent of an eleventh invention, which is in the ninth invention, in the viscosity adjustment step, the post-washing light liquid generated in the alkaline washing step according to claim 1 is used as a diluent added to an extractant.

### Advantageous Effects of Invention

According to the first invention, by removing the metallic impurities in the sulfuric acid washing step and then performing the alkaline washing step on the post-sulfuric acid washing organic containing organic impurities, the post-washing light liquid from which the impurities are removed and the post-washing heavy liquid in which the impurities remain are obtained. The post-washing heavy liquid is separated into the precipitate dissolution liquid and the post-precipitate dissolution organic in the precipitate dissolution step, and by repeatedly using the post-precipitate dissolution organic in the alkaline washing step, the post-washing light liquid from which the impurities are sufficiently removed is obtained, and the post-precipitate dissolution organic can be used as an organic solvent again.

According to the second invention, the post-back extraction organic generated in the nickel and cobalt smelting process can be regenerated as an organic solvent containing reduced impurities.

According to the third invention, when the extraction starting liquid is obtained in the leaching step, the extraction starting liquid can be handled as a liquid, therefore, the solvent extraction step and the back extraction step as later process are easily executed.

According to the fourth invention, by performing the precipitate-liquid separation step on the post-separation heavy liquid after separating zinc in the zinc separation step, the post-separation post-precipitate dissolution organic is obtained, and an organic solvent appropriate for the impurity removal in the basic process is obtained.

According to the fifth invention, since the pH is in the appropriate range, tetrachlorobenzenesulfonic acid, heptanoic acid, and trichloromethanesulfonic acid can be removed.

According to the sixth invention, since the neutralizer that is a solution or a slurry can facilitate the pH measurement, the pH management during the alkaline washing step can be properly performed.

According to the seventh invention, by adjusting the organic solvent to have a low viscosity in the viscosity adjustment step, the impurities can be efficiently removed in the basic process.

According to the eighth invention, since only those having an acceptable degree of deterioration by the deterioration evaluation are repeatedly subjected to the alkaline washing step, the impurities can be efficiently removed in the alkaline washing step.

According to the ninth invention, since the viscosity of the organic solvent decreases, involvement of the aqueous phase containing the impurities to the organic solvent in the sulfuric acid washing step is suppressed, and the impurities can be efficiently removed.

According to the tenth invention, the use of the organic solvent having the low viscosity as the diluent suppresses the involvement of the aqueous phase containing the impurities to the organic solvent in the sulfuric acid washing step, and the impurities can be efficiently removed.

According to the eleventh invention, the use of the post-washing light liquid generated in the alkaline washing step suppresses the involvement of the aqueous phase containing the impurities to the organic solvent in the sulfuric acid washing step, and the impurities can be efficiently removed.

### Brief Description of Drawings

Fig. 1 is a process diagram of a basic process in an organic impurity removal method according to the present invention.
Fig. 2 is a process diagram of a nickel and cobalt smelting process in which a post-back extraction organic appropriate for being removed in the basic process of Fig. 1 is generated.
Fig. 3 is a process diagram of a post-treatment process of the post-back extraction organic generated in the nickel and cobalt smelting process.
Fig. 4 is an explanatory view of a viscosity adjustment step S21 and a deterioration evaluation step S22 as an additional process to the basic process illustrated in Fig. 1.
Fig. 5 is a diagram illustrating a relation between a sulfuric acid washing and a metallic impurity removal rate.
Fig. 6 is a diagram illustrating a relation between a pH after an alkaline washing treatment and an organic impurity washing rate.
Fig. 7 is a diagram illustrating washing rates of four kinds of organic impurities in a diluted organic solvent.

### Description of Embodiments

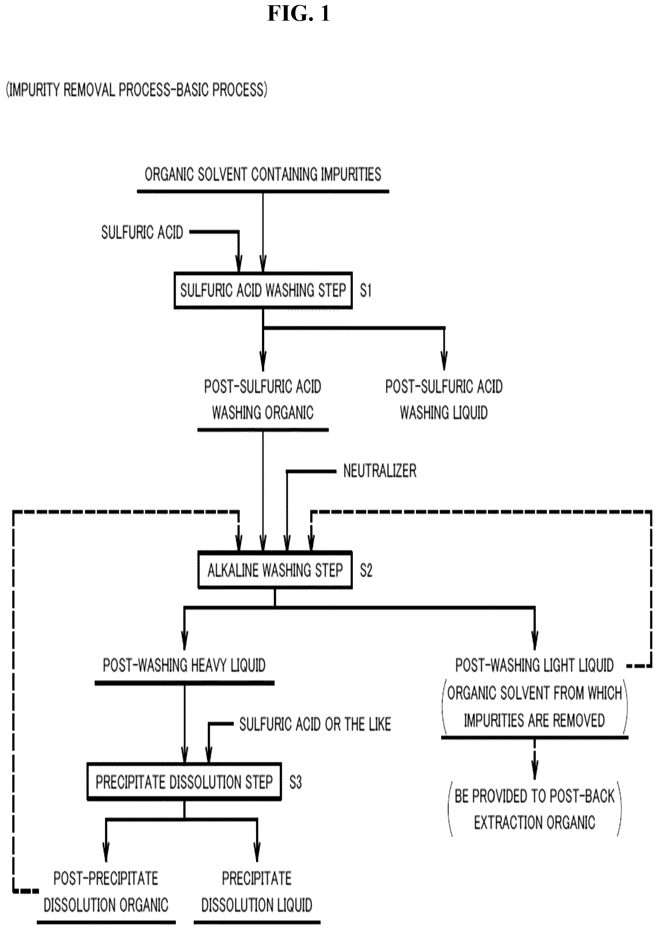

A basic process for executing an organic impurity removal method according to the present invention is described based on Fig. 1.

The basic process of the present invention is a method for removing organic impurities from an organic solvent containing impurities, and includes (1) a sulfuric acid washing step S1 of adding sulfuric acid to an organic solvent containing impurities to obtain a post-sulfuric acid washing liquid and a post-sulfuric acid washing organic, (2) an alkaline washing step S2 of adding a neutralizer to the post-sulfuric acid washing organic to adjust a pH and separating the post-sulfuric acid washing organic into a post-washing heavy liquid containing a neutralized precipitate, an aqueous phase, and an organic phase and a post-washing light liquid containing an organic phase, and (3) a precipitate dissolution step S3 of adding sulfuric acid to the post-washing heavy liquid to obtain a post-precipitate dissolution organic and a precipitate dissolution liquid, and (4) the post-precipitate dissolution organic is repeatedly used in the alkaline washing step S2.

According to the removal method, since metallic impurities are contained in the post-sulfuric acid washing liquid and removed in the sulfuric acid washing step S1, the post-sulfuric acid washing organic contains organic impurities. The post-sulfuric acid washing organic is separated into the post-washing light liquid (organic solvent) from which the impurities are removed and the post-washing heavy liquid in which the impurities remain in the alkaline washing step S2. The post-washing heavy liquid is separated into the precipitate dissolution liquid and the post-precipitate dissolution organic in the precipitate dissolution step S3, and the post-precipitate dissolution organic is sent to the alkaline washing step S2 again and repeatedly subjected to the alkaline washing. The post-washing light liquid repeatedly washed in the alkaline washing step S2 is provided as a reusable organic solvent because the organic impurities are sufficiently removed.

An object of the organic impurity removal by the present invention is not especially limited insofar as it is an "organic solvent containing impurities." However, it can be appropriately used in a case of removing impurities accumulated in an extractant (organic solvent) used in a solvent extraction in a nickel and cobalt smelting process and removing organic impurities as deterioration of the extractant itself.

The organic solvent from which the impurities are removed by the present invention can be reused as a regenerated organic solvent for an extractant used in the solvent extraction again and other usages.

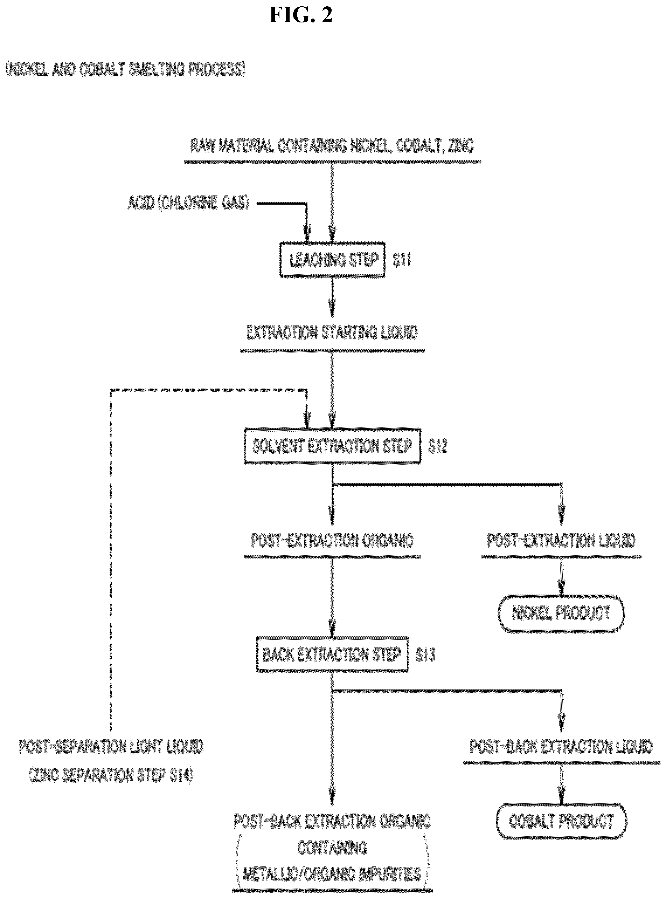

An outline of the nickel and cobalt smelting process is described based on Fig. 2.

A post-extraction liquid and a post-extraction organic are obtained from a raw material containing nickel, cobalt, and zinc by a solvent extraction step S12. A nickel product is obtained from the post-extraction liquid through a necessary process. The post-extraction organic is subjected to a back extraction step S13. In the back extraction step S13, a post-back extraction liquid and a post-back extraction organic that contains impurities other than cobalt or nickel are obtained. While a cobalt product can be obtained from the post-back extraction liquid through a necessary process, metallic and organic impurities are accumulated in the post-back extraction organic. Since the removal of the impurities allows regeneration as an organic solvent, performing the basic process of the present invention is meaningful.

In the smelting step illustrated in Fig. 2, a leaching step S11 is preferred to be performed before the solvent extraction step S12 in some cases. By executing the leaching step S11 in which the raw material containing nickel, cobalt, and zinc is leached with acid or a chlorine gas, an extraction starting liquid containing nickel and cobalt can be obtained. Since the extraction starting liquid can be handled as a liquid, the solvent extraction step S12 and the back extraction step S13 as later process are easily executed.

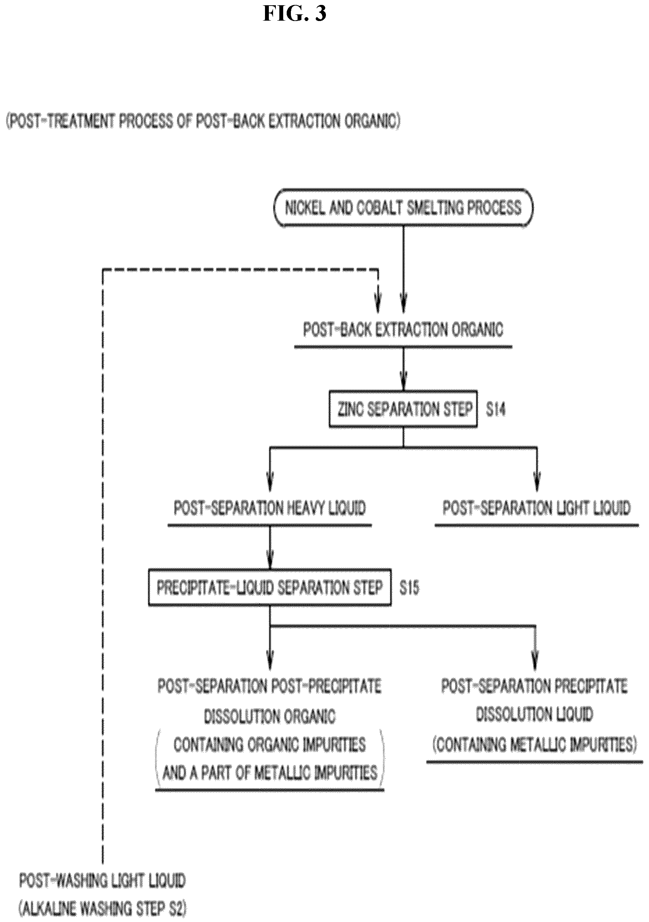

In the post-back extraction organic obtained in the nickel and cobalt smelting process as described above, in addition to metallic impurities, such as zinc, organic impurities remain. When the amount of the metallic impurities is small, the post-back extraction organic may be directly subjected to the basic process of the impurity removal process (Fig. 1). However, when the amount of the metallic impurities is large, preliminarily removing the metallic impurities increases a removal efficiency, therefore, it is preferred that the post-back extraction organic is subjected to a post-treatment process illustrated in Fig. 3 and then subjected to the basic process of the organic impurity removal.

The post-treatment process illustrated in Fig. 3 is described.

The post-back extraction organic obtained in the nickel and cobalt smelting process is subjected to a zinc separation step S14, and separated into a post-separation heavy liquid and a post-separation light liquid by adding a neutralizer, such as sodium hydroxide, to adjust a pH to 8 to 9. The post-separation light liquid mainly containing organic matters is activated by adding hydrochloric acid or the like, and can be used as an organic solvent again. For example, the obtained post-separation light liquid is provided to the solvent extraction step S12 as a solvent as indicated by a dotted line in Fig. 2. On the other hand, the post-separation heavy liquid is subjected to a precipitate-liquid separation step S15 because it contains a precipitate and a part of the organic matters, and hydrochloric acid is added to separate the post-separation heavy liquid into a post-separation precipitate dissolution liquid containing metallic impurities, such as zinc, and a post-separation post-precipitate dissolution organic. The post-separation post-precipitate dissolution organic obtained as described above is an organic that contains the organic impurities and a part of the metallic impurities extracted again, such as zinc. The post-separation post-precipitate dissolution organic is subjected to the basic process of Fig. 1.

The organic impurities contained in the post-separation post-precipitate dissolution organic obtained in the post-treatment process include organic impurities typified by heptanoic acid as a result of degradation and decomposition of carboxylic acid, and trichloromethanesulfonic acid and tetrachlorobenzenesulfonic acid as results of degradation of sulfonic acid.

The organic impurities, such as heptanoic acid, transitions to an organic phase when the pH decreases by adding acid, therefore, when the organic solvent is repeatedly used while the organic impurities are contained, the organic impurities accumulate without being extracted.

However, by using the impurity removal method (basic process of Fig. 1) of the present invention, most of the organic impurities can be removed and the organic solvent can be used again as described later.

An embodiment of the impurity removal method whose outline is described above is described below in detail with reference to Fig. 1.

### (1) Sulfuric Acid Washing Step S1

An organic solvent containing impurities, for example, the post-separation post-precipitate dissolution organic obtained in the treatment illustrated in Fig. 3 is subjected to the sulfuric acid washing step S1. In the sulfuric acid washing step S1, sulfuric acid is added to the organic solvent containing impurities, thereby obtaining the post-sulfuric acid washing liquid and the post-sulfuric acid washing organic.

By the sulfuric acid washing of the organic solvent containing impurities, a complex of iron and chlorine is mainly separated, thereby allowing removal of iron that causes a generation of a solid material or the like.

The reason is that adding sulfuric acid decreases the chloride concentration in the post-separation post-precipitate dissolution organic, which enables destroying chloro complex ions (FeCl₄⁻) formed by iron, zinc, and copper in the chloride solution, and consequently, iron is easily removed from the organic solvent.

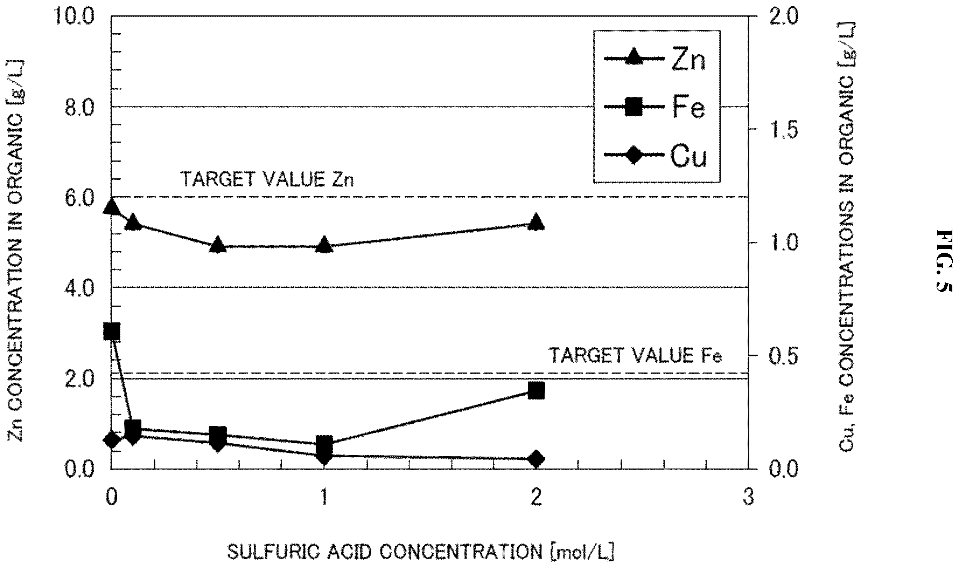

As a result, the metals, such as iron, zinc, and copper, are included in the post-sulfuric acid washing liquid and removed. As illustrated in Fig. 5, when an acid concentration of the sulfuric acid solution to be mixed (horizontal axis) is 0.1 mol/L or more, the washing effects of iron (Fe), zinc (Zn), and copper (Cu) increase.

Since the precipitate generation is suppressed by removing the metals, such as iron, zinc, and copper, in the sulfuric acid washing step S1, solid-liquid separation (phase separability) of the solution in the later process is improved, and the removal of the organic impurities is facilitated. Consequently, the separability of the post-washing heavy liquid and the post-washing light liquid in the alkaline washing step S2 can be improved, and the precipitate solubility in the precipitate dissolution step S3 as the further later process is also improved.

Since the metallic impurities are removed in the sulfuric acid washing step S1, when the post-separation post-precipitate dissolution organic as a starting raw material does not contain the metallic impurities or contains them by equal to or less than an acceptable value, it cannot be said that the sulfuric acid washing step S1 is required in theory. However, since it is industrially difficult to stably cause the metallic impurities not to be contained, for stably removing the metallic impurities and improving the separability of the organic phase and the aqueous phase, the sulfuric acid washing step S1 is virtually required.

When the amount of the metallic impurities contained in the post-separation post-precipitate dissolution organic is equal to or less than the acceptable value, it is not necessary that the whole amount of the post-separation post-precipitate dissolution organic is subjected to the sulfuric acid washing step S1, and the alkaline washing step S2 may be immediately performed.

### (2) Alkaline Washing Step S2

The post-sulfuric acid washing organic obtained by the sulfuric acid washing step S1 is subjected to the alkaline washing step S2 in which the neutralizer is added to adjust the pH. By increasing the pH with the neutralizer, the organic impurities transition to the aqueous phase, and subsequently, by separating the organic from the aqueous phase, the post-sulfuric acid washing organic is separated into the post-washing light liquid from which the organic impurities are removed and the post-washing heavy liquid. The post-washing light liquid can be reused as an organic solvent from which the impurities are removed, and the post-washing heavy liquid is subjected to the next precipitate dissolution step S3 because the organic impurities are contained.

In the pH adjustment in the alkaline washing step S2, the neutralizer may be added to maintain the pH in a range of 6 or more and 12 or less, preferably the pH of 8 or more and 12 or less, and more preferably the pH of 9 or more and 12 or less.

The pH of less than 6 can hardly remove the organic impurities. The pH of 6 or more can remove tetrachlorobenzenesulfonic acid, and further, the pH of 8 or more can almost completely remove also heptanoic acid. Furthermore, the pH of 9 or more can almost completely remove also trichloromethanesulfonic acid.

In a strong alkaline range in which the pH exceeds 12, the removal effect is hardly improved, and rather it does not provide an advantage in cost, durability of facility material, safety in handling, or the like.

By adjusting the pH in the above-described range, the organic impurities can be distributed to the post-washing heavy liquid, and the post-washing light liquid from which the organic impurities are removed can be obtained.

The post-washing light liquid obtained in the alkaline washing step S2 contains a part of the aqueous phase and precipitates while the impurities are removed. A part of the post-washing light liquid may be subjected to the alkaline washing step S2 as indicated by a dotted line in Fig. 1. By repeatedly using the post-washing light liquid from which the metallic impurities and the organic impurities are separated, an effect same as that of diluting the post-sulfuric acid washing organic can be provided, and the separability of the post-washing heavy liquid and the post-washing light liquid is also improved.

As indicated by a dotted line in Fig. 3, the most part of the post-washing light liquid obtained in the alkaline washing step S2 of the basic process may be provided to the post-back extraction organic subjected to the zinc separation step S14 when the post-treatment process is started. In this case, the effect of diluting the post-back extraction organic is provided, and the zinc separation step S14 and the precipitate-liquid separation step S15 are easily performed.

In the alkaline washing step S2 illustrated in Fig. 1, the neutralizer is added in the form of a solution or a slurry.

As the neutralizer, a solution of sodium hydroxide or the like can be used. While a neutralizer of a solid of sodium hydroxide crystal or the like can be used because it actually has an aqueous phase involved in the organic phase, it is not practical because the pH cannot be measured when the solvent contains completely an organic solvent alone.

The removal of the organic impurities by the alkaline washing in the alkaline washing step S2 effectively functions especially on the organic solvent containing an organic acid that forms a sodium salt derived from carboxylic acid as impurities.

### (3) Precipitate Dissolution Step S3

The post-washing heavy liquid obtained in the alkaline washing step S2 is subjected to the precipitate dissolution step S3. In the precipitate dissolution step S3, sulfuric acid is used for the separation into the post-precipitate dissolution organic and the precipitate dissolution liquid. For the sulfuric acid used here, not only additional sulfuric acid, but also the post-sulfuric acid washing liquid obtained in the sulfuric acid washing step S1 may be used. In the precipitate dissolution step S3, formation of the chloro complex of iron is suppressed to avoid extraction in the organic phase by adding sulfuric acid. In view of this, the post-precipitate dissolution organic hardly contains iron, copper, or zinc.

### (4) Repeating Process

The obtained post-precipitate dissolution organic is repeatedly used for the alkaline washing by the required number of times in the alkaline washing step S2.

The precipitate dissolution liquid is treated in a wastewater treatment step using a publicly known treatment method, and discharged as wastewater outside the system.

As described above, by executing the basic treatment process illustrated in Fig. 1, the impurities accumulated in the organic solvent, especially the organic impurities can be sufficiently removed. The organic solvent from which the organic impurities are thus separated can be reused for various kinds of purpose. Especially, in the removal method of the present invention, it is effective for organic acid that forms sodium salt as organic impurities. Further, a remarkable effect is provided when the organic acid is derive from carboxylic acid.

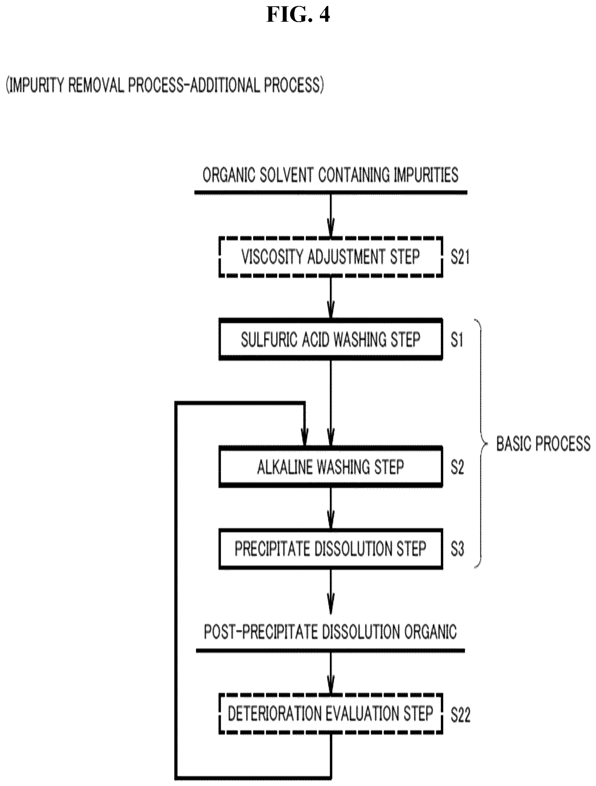

Next, a viscosity adjustment step S21 and a deterioration evaluation step S22 added to the basic process in some cases are described based on Fig. 4.

### (Viscosity Adjustment Step S21)

In a case where the post-separation post-precipitate dissolution organic obtained in the precipitate-liquid separation step S15 illustrated in Fig. 3 has no problem in the separability of the organic phase and the aqueous phase, it is preferably subjected to the sulfuric acid washing step S1 after the adjustment of the viscosity of the post-separation post-precipitate dissolution organic when an industrial operation is performed although it is not required.

Even when a large part of the metallic impurities are separated from the organic solvent, the metal ions close to a saturation concentration are still extracted and simultaneously organic deteriorated materials are contained in many cases, and the viscosity is often increased. In this case, the high viscosity increases the involvement of the aqueous phase containing the impurities to the organic solvent, and the impurities are not efficiently removed.

Therefore, in the viscosity adjustment step S21, the post-back extraction organic and the post-washing organic are added, thereby adjusting the organic solvent to have the low viscosity. For example, the organic solvent is diluted until the viscosity becomes less than 200 mPa•s. This sufficiently decreases the viscosity of the organic solvent, therefore, the involvement of the aqueous phase containing the impurities to the organic solvent is suppressed in the sulfuric acid washing step S1, thus allowing efficiently removing the impurities.

For the viscosity adjustment, for example, it is preferred to use an organic solvent having a diluent concentration of 80 to 60 weight% and an extractant concentration of 20 to 40 weight%. The use of the organic solvent having such a low viscosity suppresses the involvement of the aqueous phase containing the impurities to the organic solvent, thus allowing efficiently removing the impurities.

As the diluent for adjusting the organic solvent to the low viscosity, the post-washing light liquid generated in the alkaline washing step S2 of the basic process (Fig. 1) of the present invention can be used. Since the post-washing light liquid is an organic solvent from which the impurities are removed, the organic solvent diluted therewith has a low viscosity. Therefore, the involvement of the aqueous phase containing the impurities is suppressed, thus allowing efficiently removing the impurities.

The post-back extraction organic obtained in the nickel and cobalt smelting process (Fig. 2) of the present invention also can be used as the diluent. The post-back extraction organic contains a dilution component while containing the metallic/organic impurities, thereby allowing the organic solvent to have a low viscosity.

### (Deterioration Evaluation Step S22)

The post-precipitate dissolution organic obtained in the basic process is preferred to be subjected to the deterioration evaluation step S22 in some cases. A method for evaluating the degree of deterioration of the organic solvent includes, for example, a method of measuring the viscosity. When the viscosity is a certain viscosity or less, the post-precipitate dissolution organic is repeatedly subjected to the alkaline washing step S2, and the post-washing light liquid increased in impurity removal rate is used again as the organic solvent for the cobalt extraction.

The post-precipitate dissolution organic having the certain viscosity or more can be evaluated to be deteriorated and not able to be reused. The deteriorated organic solvent only needs to be subjected to a publicly known waste organic treatment and disposed.

### [Examples]

The following describes examples of the present invention.

### <Example 1> (Preparation of Organic Solvent Containing Impurities)

As the organic solvent, tri-normal-octylamine (hereinafter referred to as TNOA) that is a carboxylic acid-based extractant was used for the extractant, and a diluent (manufactured by Maruzen Petrochemical Co., Ltd., product name: Swasol 1800) was added thereto, which was adjusted to have an extractant concentration of 28 weight%. The organic solvent containing the extractant and the diluent was repeatedly subjected to a solvent extraction process of cobalt using a publicly known method.

As a specific process, a raw material containing nickel and cobalt is subjected to the leaching step S11 illustrated in Fig. 2 to be leached with a chlorine gas, thereby obtaining an extraction starting liquid of an acidic solution of hydrochloric acid containing cobalt. The extraction starting liquid is subjected to the solvent extraction step S12. In the solvent extraction step S12, nickel was left in a post-extraction liquid, and a post-extraction organic was obtained.

Next, the post-extraction organic was washed by a publicly known method, and subjected to the back extraction step S13. Adding a hydrochloric acid solution in the back extraction step S13 caused the separation into a post-back extraction liquid in which cobalt was back-extracted and a post-back extraction organic.

Since the post-back extraction organic contains metallic impurities, such as iron and zinc, and organic impurities as a removal target of the present invention, a part of them were extracted, and then the post-treatment process illustrated in Fig. 3 was performed.

In the zinc separation step S14 of the post-treatment process (Fig. 3), a neutralizer, such as sodium hydroxide, was added to the post-back extraction organic, which was adjusted to have the pH of 8 to 9 and neutralized, thereby performing the separation into a post-separation heavy liquid in which the precipitate and a part of the organic matters were mixed and a post-separation light liquid mainly containing the organic matters. The post-separation light liquid was activated by adding hydrochloric acid, and the organic solvent after the activation was repeatedly used for the cobalt extraction.

On the other hand, the post-separation heavy liquid was subjected to the precipitate-liquid separation step S15 of adding hydrochloric acid, and separated into a post-separation precipitate dissolution liquid and a post-separation post-precipitate dissolution organic by solid-liquid separation. The post-separation precipitate dissolution liquid containing a large amount of metallic impurities was sent to the wastewater treatment step, and discharged by performing a wastewater treatment with a publicly known method.

The post-separation post-precipitate dissolution organic was mixed with the post-back extraction organic and repeatedly used as an organic solvent, or repeatedly subjected to the zinc separation step S14, thereby accumulating organic impurities in the organic solvent.

### (Impurity Removal by Basic Process)

First, the sulfuric acid washing step S1 of the basic process was performed. Five samples were extracted from the prepared organic solvent containing the organic impurities (corresponding to the post-separation post-precipitate dissolution organic).

### (Sulfuric Acid Washing)

Sulfuric acid washing was performed on the respective five samples in a case of only water not containing sulfuric acid and cases of adding sulfuric acid solutions having the concentrations of 0.1 mol/L, 0.5 mol/L, 1 mol/L, and 2 mol/L by the same volume as the organic solvent (sulfuric acid washing step S1). The respective concentrations of zinc, iron, and copper in the obtained organic solvents were measured, and the change of the metallic impurities was examined.

As illustrated in Fig. 5, by washing at the sulfuric acid concentration of about 0.1 mol/L, zinc, iron, and copper in the organic solvent were able to be reduced. While 7.9 g/L of zinc, 1.8 g/L of iron, and 0.29 g/L of copper were contained in the organic before the washing, they were all able to be reduced to a target value or less. Specifically, zinc was reduced to 5.5 g/L, iron was reduced to 0.17 g/L, and copper was reduced to 0.14 g/L.

### (Alkaline Washing)

Next, the post-sulfuric acid washing organic after performing the sulfuric acid washing was extracted, and the alkaline washing treatment was performed (alkaline washing step S2) by adding a sodium hydroxide solution such that each of the samples has a volume ratio (O/A ratio) of the aqueous phase/the organic phase after the washing of 1.0 and adjusting the pH of each sample in a range of from 5 to 12 while keeping the temperature at 60°C.

The organic solvent was measured before and after the alkaline washing treatment using a high-performance liquid chromatography mass spectrometer (LC/MS), and a proportion of the organic impurity removed from the organic solvent, that is, the washing rate was obtained from peak area ratios of detected components for each of the components.

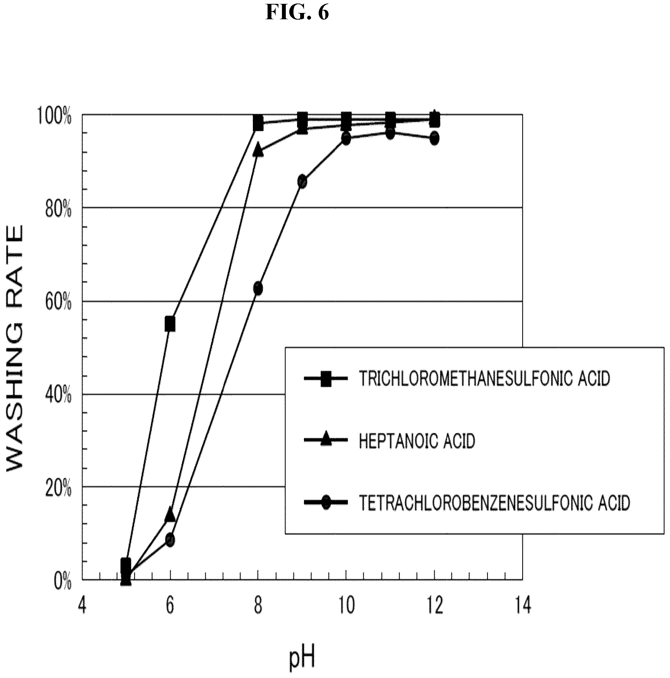

A relation between the pH and the removal rate (washing rate) of the organic impurities by the alkaline washing treatment is illustrated in Table 1 and Fig. 6. While the washing rate of 9% is obtained at the pH of 6, by further increasing the pH up to the range between 8 and 9, the washing rate was rapidly improved linearly. Especially, at the pH of 9, 86% or more of the washing rates of heptanoic acid (C₇H₁₄O₂), trichloromethanesulfonic acid (CHCl₃O₃S), and tetrachlorobenzenesulfonic acid (C₆H₂Cl₄O₃S) were obtained.

**[Table 1]**

| pH | 5 | 6 | 8 | 9 | 10 | 11 | 12 |
|---|---|---|---|---|---|---|---|
| Heptanoic acid | 1 | 15 | 93 | 97 | 98 | 99 | 100 |
| Trichloromethanesulfonic acid | 3 | 55 | 98 | 99 | 99 | 99 | 99 |
| Tetrachlorobenzenesulfonic acid | 1 | 9 | 63 | 86 | 96 | 97 | 95 |

| | | | | | | | |
|---|---|---|---|---|---|---|---|
| (weight%) | | | | | | | |

### <Example 2>

The organic impurity removal was performed by the basic process of the present invention using an organic solvent containing TNOA, which contains only organic impurities and does not contain metallic impurities, as a treatment target, and the result was confirmed.

Specifically, an acidic solution of hydrochloric acid in which a cobalt chloride reagent not containing iron or zinc was dissolved was used as the extraction starting liquid, and in the following process, the organic impurities were accumulated in the organic solvent by the same method as Example 1.

At a point when the organic impurities were sufficiently accumulated, the zinc separation step S14 of the post-treatment process (Fig. 3) was performed to cause neutralization, thereby obtaining a post-separation heavy liquid and a post-separation light liquid. Then, the post-separation heavy liquid was subjected to the precipitate-liquid separation step S15 of dissolving with hydrochloric acid, thus obtaining a post-separation post-precipitate dissolution organic. This post-separation post-precipitate dissolution organic contains organic impurities.

Subsequently, the post-separation post-precipitate dissolution organic was subjected to the basic process (Fig. 1). Since this post-separation post-precipitate dissolution organic does not contain iron or zinc, the sulfuric acid washing step S1 was omitted and the alkaline washing step S2 was directly performed. The heptanoic acid concentration in the post-separation post-precipitate dissolution organic at this stage was 4800 wt.ppm by the measurement using a gas chromatograph-flame ionization detector and a high-performance liquid chromatography mass spectrometer. The TNOA concentration was 18 weight%.

In the alkaline washing step S2, pure water and a sodium hydroxide solution were added to the post-separation post-precipitate dissolution organic by the same volume as the organic, and the pH was adjusted to 12 while keeping the temperature at 60°C. Subsequently, an alkaline washing in which the post-washing light liquid as the organic solvent and the post-washing heavy liquid were separated using a centrifugal separator, and pure water and the sodium hydroxide solution were added to the post-washing light liquid by the same volume as the organic to adjust the pH to 12 was repeatedly performed, and the alkaline washing was performed four times in total. The heptanoic acid after completion was reduced to 30 wt.ppm. Since the TNOA concentration is 27 weight% and it is almost the same as the concentration at the initial preparation, even in consideration of the liquid amount change due to concentration or dilution, it was confirmed that the use of the impurity removal method of the present invention allows effectively removing the organic impurities, such as heptanoic acid.

### <Example 3>

An organic solvent in which TNOA was used as an unused extractant and a diluent (product name: Swasol 1800) was added thereto and mixed to have a TNOA concentration of 28 weight%, the post-washing light liquid (organic solvent from which the impurities are removed) obtained in the alkaline washing step S2, and the organic obtained in the back extraction step S13 of the nickel and cobalt smelting process (Fig. 2) were each extracted by 100 ml, and 100 ml of the TNOA organic solvent containing the organic impurities same as those used in the above-described Example 1 was mixed with each of them. That is, each of the samples was obtained by diluting the organic solvent containing organic impurities twice.

Next, the mixed samples were each subjected to the sulfuric acid washing (corresponding to the sulfuric acid washing step S1) as in Example 1, and further the alkaline washing treatment (corresponding to the alkaline washing step S2) in which a sodium hydroxide solution was added as an aqueous phase to adjust the pH of the aqueous phase to 12 while keeping the temperature at 60°C was performed.

Next, for each of the samples, the washing rate was obtained from the peak area ratio of LC/MS before and after the alkaline washing treatment. The LC/MS in this Description means an analysis method in which a liquid chromatography is combined with a mass spectrometry, and allows separating components of a sample by LC and measuring an ion intensity of an analyte by MS.

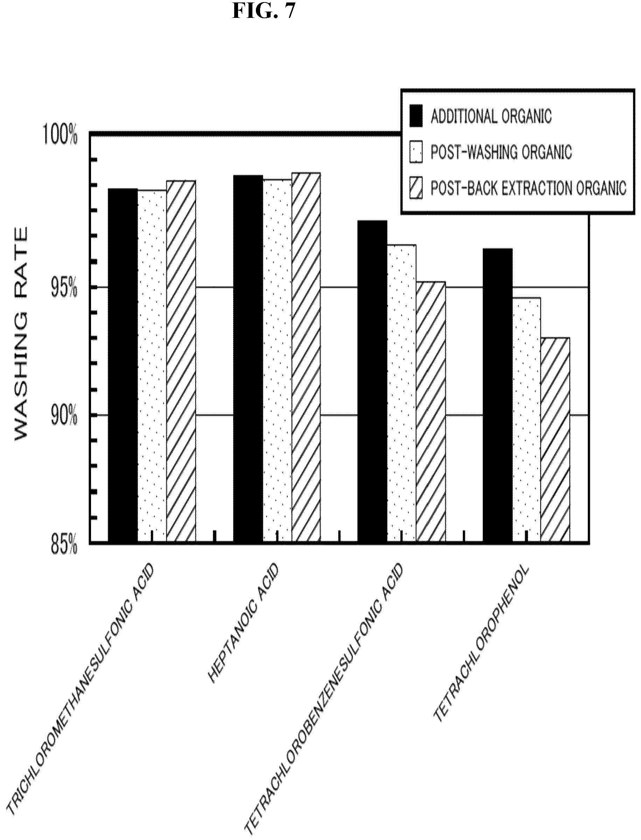

Fig. 7 illustrates the washing rate of each of the four kinds the organic impurities (trichloromethanesulfonic acid, heptanoic acid, tetrachlorobenzenesulfonic acid, and tetrachlorophenol) by a black bar chart indicating a case of the unused organic solvent, a dotted bar chart indicating the case of the post-washing light liquid obtained in the alkaline washing step S2, and a hatched bar chart indicating the case of the organic solvent obtained in the back extraction step S13 of the nickel and cobalt smelting process. As illustrated in Fig. 7, the washing rate (removal rate) of 90% or more was able to be obtained for all the organic impurities without a poor reaction due to the reduced viscosity caused by the organic solvent diluted twice.

### <Reference Example 1>

The viscosities of TNOA containing the organic impurities provided in Example 1 and Example 3 were 200mPa•s or more at 60°C. When this TNOA was subjected to the alkaline washing without the dilution as performed in Example 3, the precipitate generated in the pH adjustment was involved and the solid-liquid separability reduced.

### Reference Signs List

- S1: sulfuric acid washing step
- S2: alkaline washing step
- S3: precipitate dissolution step
- S11: leaching step
- S12: solvent extraction step
- S13: back extraction step
- S14: zinc separation step
- S15: precipitate-liquid separation step
- S21: viscosity adjustment step
- S22: deterioration evaluation step

## Claims

1. A method for removing organic impurities from an organic solvent containing impurities, comprising
a basic process that includes (1) to (4):
(1) a sulfuric acid washing step of adding sulfuric acid to an organic solvent containing impurities to obtain a post-sulfuric acid washing liquid and a post-sulfuric acid washing organic;
(2) an alkaline washing step of adding a neutralizer to the post-sulfuric acid washing organic to adjust a pH and separating the post-sulfuric acid washing organic into a post-washing heavy liquid containing a neutralized precipitate, an aqueous phase, and an organic phase and a post-washing light liquid containing an organic phase; and
(3) a precipitate dissolution step of adding sulfuric acid to the post-washing heavy liquid to obtain a post-precipitate dissolution organic and a precipitate dissolution liquid, wherein
(4) the post-precipitate dissolution organic is repeatedly used in the alkaline washing step.

2. The method for removing organic impurities in an organic solvent according to claim 1, wherein
the organic solvent containing impurities subjected to the basic process is a post-back extraction organic obtained by separating a post-extraction liquid containing nickel from a raw material containing nickel, cobalt, and zinc by a solvent extraction step to obtain a post-extraction organic and separating a post-back extraction liquid containing cobalt from the post-extraction organic by a back extraction step.

3. The method for removing organic impurities in an organic solvent according to claim 2, wherein
the organic solvent containing impurities subjected to the basic process is a post-back extraction organic obtained by obtaining an extraction starting liquid by a leaching step in which a raw material containing nickel, cobalt, and zinc is leached with an acid or a chlorine gas and then sequentially executing the solvent extraction step and the back extraction step.

4. The method for removing organic impurities in an organic solvent according to claim 2, wherein
the organic solvent containing impurities subjected to the basic process is a post-separation post-precipitate dissolution organic obtained by obtaining a post-separation heavy liquid and a post-separation light liquid by a zinc separation step in which a neutralizer is added to the post-back extraction organic to separate zinc and performing a precipitate-liquid separation step in which hydrochloric acid is added to the post-separation heavy liquid to separate a post-separation precipitate dissolution liquid.

5. The method for removing organic impurities in an organic solvent according to claim 1, wherein
in the alkaline washing step, the pH when the post-sulfuric acid washing organic and the neutralizer are mixed is maintained in a range of 6 or more and 12 or less.

6. The method for removing organic impurities in an organic solvent according to claim 5, wherein
the neutralizer is added in a form of a solution or a slurry containing the neutralizer.

7. The method for removing organic impurities in an organic solvent according to claim 1, wherein
the organic solvent containing impurities is subjected to a viscosity adjustment step of adjusting a viscosity before subjected to the basic process.

8. The method for removing organic impurities in an organic solvent according to claim 1, wherein
the post-precipitate dissolution organic obtained by the basic process is subjected to a deterioration evaluation step of evaluating a deterioration, and then repeatedly subjected to the alkaline washing step.

9. The method for removing organic impurities in an organic solvent according to claim 7, wherein
in the viscosity adjustment step, the organic solvent is diluted until the viscosity of the organic solvent becomes less than 200 mPa•s.

10. The method for removing organic impurities in an organic solvent according to claim 9, wherein
in the viscosity adjustment step, an organic solvent having a diluent concentration of 80 to 60 weight% and an extractant concentration of 20 to 40 weight% is used.

11. The method for removing organic impurities in an organic solvent according to claim 9, wherein
in the viscosity adjustment step, the post-washing light liquid generated in the alkaline washing step according to claim 1 is used as a diluent added to an extractant.
